# EUROPÄISCHE PATENTSCHRIFT

(11) **EP 3 234 401 B1**
(45) Veröffentlichungstag und Bekanntmachung des Hinweises auf die Patenterteilung: **20.02.2019**
(21) Anmeldenummer: 15813053.4
(22) Anmeldetag: 17.12.2015
(51) Int. Cl.: F16D 55/2265

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 19.12.2014 DE 102014019113
(43) Veröffentlichungstag der Anmeldung: 25.10.2017
(73) Patentinhaber: KNORR-BREMSE Systeme für Nutzfahrzeuge GmbH, 80809 München (DE)
(72) Erfinder: PRITZ, Wolfgang, 80637 München (DE); ROTH, Nathalie, 94474 Vilshofen (DE); FISCHL, Tobias, 80336 München (DE)
(86) Internationale Anmeldenummer: PCT/EP2015/080153
(87) Internationale Veröffentlichungsnummer: WO 2016/097097

(56) Entgegenhaltungen:
- WO-A1-2005/124179
- DE-A1- 3 443 550
- DE-A1- 10 341 095
- DE-A1-102008 028 914
- DE-A1-102013 006 852

## Beschreibung

Die Erfindung betrifft eine Scheibenbremse für ein Nutzfahrzeug nach dem Oberbegriff des Anspruchs 1.

Ein auch als Schiebesattel bezeichneter Bremssattel einer gattungsgemäßen Scheibenbremse, wie sie aus der DE 10 2013 006 852 A1 bekannt ist, ist mittels Befestigungselementen an einem fahrzeugseitigen, d.h. ortsfesten Bremsträger gehalten.

Dabei sind Führungsholme der Befestigungselemente am Bremsträger insbesondere durch Verschrauben befestigt, die andererseits in Gleitlagern des Bremssattels so geführt sind, dass dieser, bezogen auf eine an einer Achse des Fahrzeugs verdrehsicher gehaltenen Bremsscheibe bei einer Bremsung axial verschiebbar ist.

Eines der Gleitlager kann als Festlager mit geringem Gleitspiel ausgebildet sein und in der Hauptsache der axialen Führung des Bremssattels dienen, wobei das Lagerspiel so gering wie möglich gehalten ist.

Das andere Gleitlager hingegen weist dann als Loslager funktionsbedingt ein größeres Lagerspiel auf, da neben der axialen Führung auch ein Toleranzausgleich sowie thermisch bedingte Ausdehnungen zu berücksichtigen sind.

Aufgrund des größeren Lagerspiels können im Fahrbetrieb Klappergeräusche entstehen, zu deren Verhinderung bzw. Dämpfung bei der bekannten Scheibenbremse eine aus Kunststoff, insbesondere einem Elastomer bestehende Gleitbuchse Verwendung findet, in der der Führungsholm axial verschiebbar gelagert ist.

Diese Gleitbuchse ist in einer Lagerhülse aus Metall, üblicherweise aus Stahlblech, verschiebegesichert gehalten, die in eine Bohrung des Bremssattels eingepresst und damit reibschlüssig darin gehalten ist, wobei die Gleitbuchse und die Lagerhülse Bestandteil einer gattungsgemäßen Führungsbuchse sind.

Zur Begrenzung des Einschubs beim Eindrücken der Führungsbuchse in die Bohrung des Bremssattels findet als weiteres Element der Führungsbuchse ein Anschlagring Verwendung, der an einer Schulter der Bohrung des Bremssattels anliegt, wobei diese Schulter in Einschubrichtung der Führungsbuchse am hinteren Ende der Bohrung des Bremssattels angeordnet ist.

Je nach Anwendung bzw. Anforderung kann die Gleitbuchse neben dem erwähnten Kunststoff auch aus einem anderen Material gebildet sein, beispielsweise aus Metall.

Betriebsbedingt kommt es bei den Gleitlagern vielfach zu Verschleißerscheinungen, die einen Austausch des jeweiligen Gleitlagers erfordern. Hierzu muss die Führungsbuchse in ihrer Gesamtheit, also die Lagerhülse, die Gleitbuchse und der Anschlagring aus der Bohrung des Bremssattels entfernt werden, was sich bislang insofern als problematisch und aufwendig darstellt, als die Führungsbuchse, wie erwähnt, kraftschlüssig im Bremssattel gehalten ist.

Zum Austausch der Führungsbuchse ist zunächst der Bremssattel vom Bremsträger zu lösen, so dass danach die Führungsbuchse ausgetrieben werden kann. Naturgemäß ist dies nur mit einem entsprechenden Aufwand und den sich daraus ergebenden Kosten möglich.

Der Erfindung liegt die Aufgabe zugrunde, eine Scheibenbremse der gattungsgemäßen Art so weiterzuentwickeln, dass sie insgesamt kostengünstiger herstellbar ist und der Austausch von Verschleißteilen, insbesondere der Gleitlager, einfacher und damit kostengünstiger wird.

Diese Aufgabe wird durch eine Scheibenbremse mit den Merkmalen des Anspruchs 1 gelöst.

Durch die erfindungsgemäße Ausgestaltung des Gleitlagers bzw. der Lagerhülse besteht nun die Möglichkeit bei einem verschleißbedingt notwendigen Austausch der Führungsbuchse dies ohne Lösen des Bremssattels vom Bremsträger zu bewerkstelligen, wobei hierzu die gemäß der Erfindung gebildete taschenförmige Werkzeugaufnahme an der insoweit frei zugänglichen Außenseite des Bremssattels vorgesehen, d.h., gebildet ist.

Damit wird der einfache Einsatz eines Werkzeuges möglich, mit dem die Führungsbuchse insgesamt herausziehbar ist.

Überdies ist die Bearbeitung des Bremssattels gegenüber der nach dem Stand der Technik deutlich vereinfacht, da die die Führungsbuchse aufnehmende Bohrung des Bremssattels keine Schulter aufweisen muss, um eine axiale Verschiebebegrenzung zu erreichen. Diese ist durch den radial nach außen gerichtet angeformten Kragen der Lagerhülse gebildet, der mit Ausnahme des mindestens einen Vorsprungs, durch den die taschenförmige Werkzeugaufnahme in Korrespondenz mit dem Bremssattel ausgebildet ist, am Bremssattel anliegt.

Die Lagerhülse kann bevorzugt aus Metall bestehen. Denkbar ist aber auch sie aus Kunststoff herzustellen, wobei der Kragen zweckmäßigerweise angeformt ist.

Nach einem weiteren Gedanken der Erfindung ist der dem Kragen gegenüberliegenden Endbereich der Lagerhülse mit einem radial nach innen gerichteten Anlagering versehen, der beispielsweise durch Stülpung gebildet ist und der zum einen eine axiale Begrenzung für die Gleitbuchse bildet, an der der Führungsholm anliegt und die in der Lagerhülse verschiebegesichert gehalten ist, und der zum anderen eine Abstützung der Lagerhülse am Führungsholm bildet, um so einer übermäßigen Belastung der Lagerhülse entgegenzuwirken.

Zur Versteifung des Anlagegringes kann dieser mit radial ausgerichteten Dellen versehen sein. Weiter besteht die Möglichkeit diesen Anschlagring in seinem Außendurchmesser kleiner auszubilden als den Außendurchmesser des angrenzenden, an der Wandung der Bohrung des Bremssattels anliegenden Bereichs der Lagerhülse. Dadurch wird eine Einschnürung geschaffen, die als Aufnahme eines Dichtungselementes dient, das aus einem Falten- oder Rollbalg bestehen kann, der mit einem Presssitz am Anlagering gehalten wird.

Im Übrigen dient der Anlagering auch als Schutz für die Gleitbuchse vor einer Beschädigung und Überbeanspruchung.

Innenseitig kann die Gleitbuchse rund ausgebildet sein, mit Nuten oder Näpfchen für eine Fettaufnahme oder unrund, unter Bildung von segmentartigen Lagerflächen, während die angrenzenden Bereiche, die nicht am Führungsholm anliegen, Fetttaschen und Verformungsfreiräume bilden.

Wie erwähnt, kann die Gleitbuchse aus Kunststoff oder Metall bestehen, so dass das Gleitlager nach der Erfindung, je nach Konfiguration der Gleitbuchse, als Loslager oder als Festlager eingesetzt werden kann. Dabei kann eine Vormontage des jeweiligen Gleitlagers erfolgen, das dann als Baueinheit zu montieren ist. Auch dies trägt in besonderer Weise zu einer Kostenminimierung bei.

Nach einem weiteren Gedanken der Erfindung weist die Lagerhülse mindestens eine, bevorzugt mehrere, über den Umfang verteilte, nach innen gerichtete Beulen auf, beispielsweise in Form von Sicken, die einen Axialanschlag sowohl für die Gleitbuchse wie auch für einen Deckel bilden, mit dem der Führungsholm überdeckt ist, und der kraftschlüssig in der Lagerhülse gehalten ist, wobei dieser Deckel den Abschluss des Gleitlagers zur Außenseite des Bremssattels hin bildet.

Durch den Anlagering einerseits und die Beulen andererseits wird eine beidseitige axiale Sicherung der Gleitbuchse erreicht, die lose, d.h. ohne weitere Verbindung mit der Lagerhülse eingesetzt sein kann, was ein recyceln ohne besonderen Demontageaufwand ermöglicht.

Auch die Herstellung der neuen Lagerhülse gestaltet sich denkbar einfach, da diese aus einem Blechformteil gebildet wird, was mit geringem fertigungstechnischem Aufwand möglich ist.

Während bislang, je nach Ausführung des Bremssattels, unterschiedliche Sattellagerungen hergestellt werden, ist durch die Erfindung eine Vereinheitlichung der Sattellagerung möglich, die den logistischen Aufwand in Bezug auf die Bereitstellung der Bremssättel reduziert und überdies im Servicefall erlaubt den Bremssatteltyp zu wechseln.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt einer erfindungsgemäßen Scheibenbremse in einem Längsschnitt
- Figuren 2 und 3: jeweils eine Baugruppe der Einzelheit nach Figur 1 in einer perspektivischen Ansicht
- Figur 4: eine Einzelheit der Baugruppe, ebenfalls perspektivisch dargestellt
- Figur 5: verschiedene Ausführungsbeispiele eines Einzelteils der Baugruppe in schaubildlicher Darstellung.

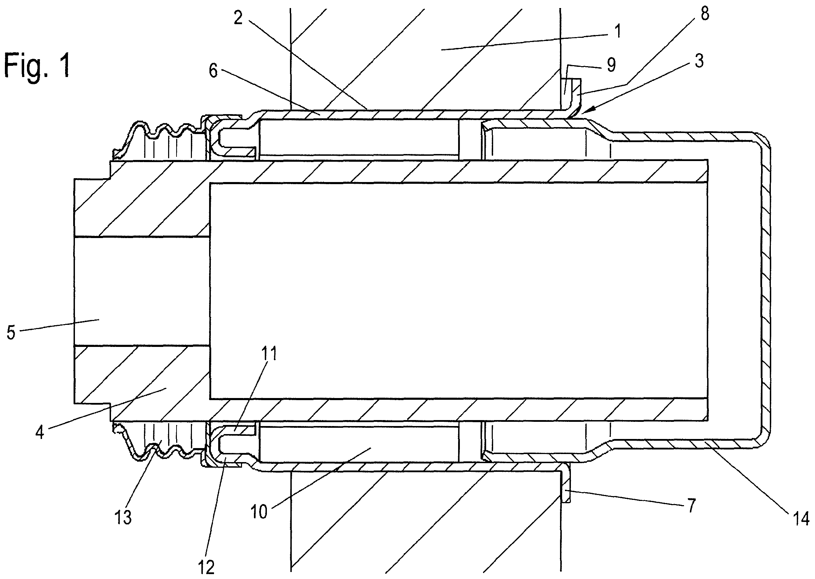

In der Figur 1 ist ein Gleitlager erkennbar, das in einer Bohrung 2 eines Bremssattels 1 einer Schiebesattel-Scheibenbremse positioniert ist und mit dem der Bremssattel 1 axial verschiebbar an einem nicht dargestellten Bremsträger gehalten ist.

Hierzu ist ein Führungsholm 4 fest mit dem ortsfesten Bremsträger verbunden, üblicherweise durch eine gleichfalls nicht gezeigte Schraube, die durch eine Durchgangsbohrung 5 des Führungsholms 4 führbar ist.

Das Gleitlager weist eine Führungsbuchse 3 auf, die aus einer in die Bohrung 2 des Bremssattels 1 eingepresste Lagerhülse 6 und einer darin verschiebegesichert gehaltenen Gleitbuchse 10 besteht, in der der Führungsholm 4 geführt ist.

Zur Einschubbegrenzung bei der Montage der Führungsbuchse 3, die als vormontierte Baueinheit mit der Gleitbuchse 10 vorliegen kann, ist ein Anschlagring vorgesehen, der aus einem radial nach außen an die Lagerhülse 6 angeformten Kragen 7 gebildet ist, der an der Außenseite des Bremssattels 1, im umfänglichen Randbereich der Bohrung 2 anliegt.

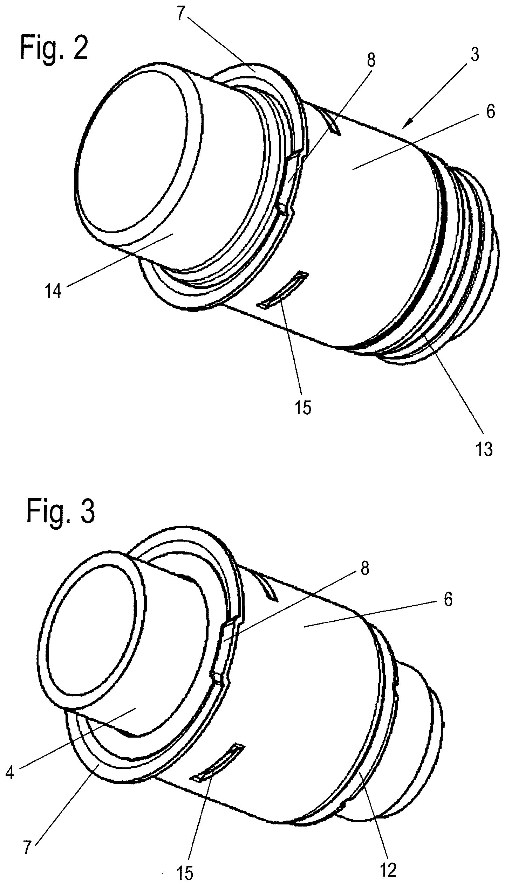

Gemäß der Erfindung weist der Kragen 7 mindestens einen Vorsprung 8 auf, deutlich zu erkennen in den Figuren 2 und 3, der abständig zum Bremssattel 1 ausgerichtet ist und durch den eine taschenförmige Werkzeugaufnahme 9 gebildet ist.

In diesem Bereich ist eine Kappe 14 zum Schutz des Innern der Führungsbuchse 3 in die Lagerhülse 6 eingepresst, während der gegenüberliegende Endbereich der Lagerhülse 6 zu einem Anlagering mit einem eingeschnürten Bündchen 12 geformt ist, dessen Ende gestülpt ist, so dass sich ein rückläufiger Schenkel 11 ergibt, der eine radiale Abstützung zum Führungsholm 4 hin bildet.

An dem Bündchen 12 ist ein Faltenbalg 13 reibschlüssig gehalten, der andererseits am Führungsholm 4 anliegt und durch den das Innere der Führungsbuchse 3 vor Verschmutzung und Witterungseinflüssen geschützt ist. In der Figur 2 ist als Einzelheit die Lagerhülse 6 mit aufgesetzter Kappe 14 und gehaltenem Faltenbalg 13 erkennbar, wobei die Kappe 14 den Führungsholm 4 endseitig überdeckt.

Die als vormontierte Baueinheit vorliegende Führungsbuchse 3 ist in der Figur 3 abgebildet, wobei hier ebenso wie in der Figur 2 die Ausbildung des Vorsprungs 8 erkennbar ist, von denen auch mehrere, über den Umfang verteilte vorgesehen sein können.

Die Lagerhülse 6 weist überdies mehrere Beulen in Form von Sicken 15 auf, die in einer Querschnittsebene liegen und nach innen gerichtet sind und zwar in einem Bereich zwischen der Kappe 14 und der Gleitbuchse 10. Dabei bilden die Sicken 15 zum einen einen Anschlag für die Kappe 14 bei dessen Einsetzen und zum anderen eine axiale Verschiebesicherung für die Gleitbuchse 10, die andererseits durch das Bündchen 12 bzw. den Schenkel 11 gegen Verschieben gesichert ist.

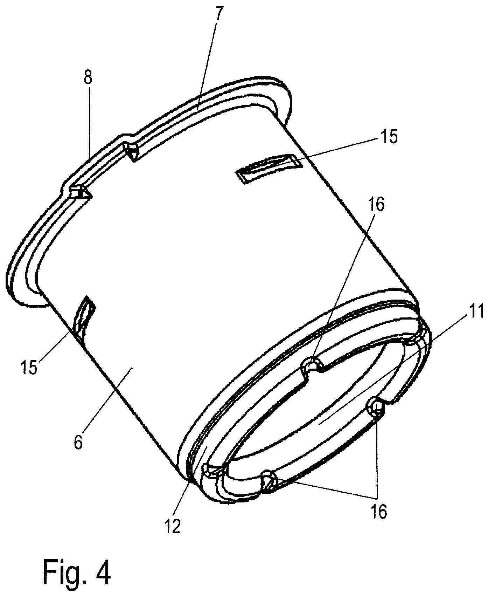

Wie besonders deutlich in der Figur 4 erkennbar, weist das eingezogene Bündchen 12 auf seiner Stirnseite, über den Umfang verteilt, Eindellungen 16 auf, durch die eine Versteifung des Bündchens 12 erreicht wird.

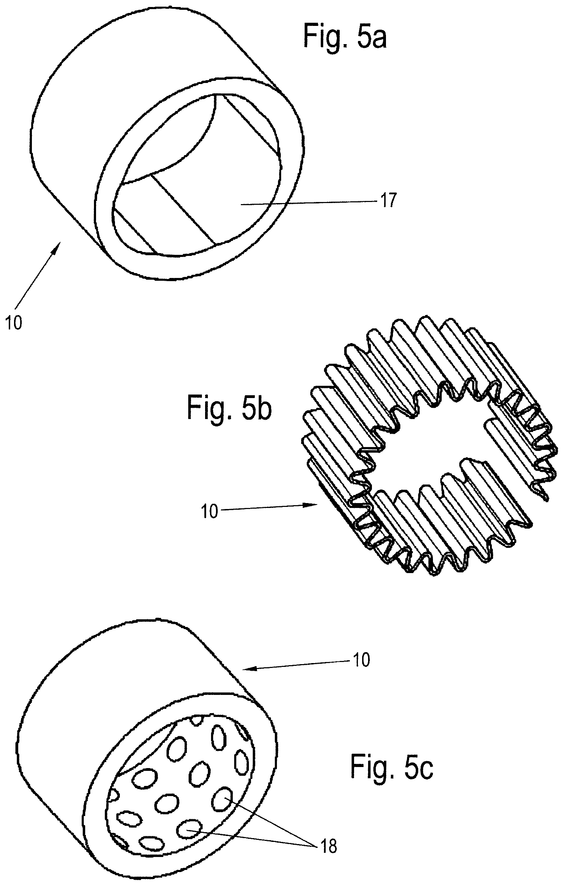

In der Figur 5 sind verschiedene Ausführungsvarianten der Gleitbuchse 10 abgebildet, wobei die Figur 5a) eine aus Metall oder Kunststoff, insbesondere aus einem Elastomer, abbildet, mit Fettnuten 17 zur Deponierung von Schmierfett, wozu die Gleitbuchse 10 nach der Figur 5c) Fettnäpfchen 18 aufweist, die in die innere Mantelfläche der Gleitbuchse 10 eingebracht sind.

Die Figur 5b) schließlich zeigt eine Gleitbuchse 10 in Form eines radial nach außen federnden, in Umfangsrichtung offenen Zahnrings, mit durch eine mäanderförmige Ausformung gebildeten Zähnen.

## Patentansprüche

1. Scheibenbremse für ein Nutzfahrzeug, mit einem eine Bremsscheibe übergreifenden Bremssattel (1), der durch zwei Befestigungselemente in Form von Gleitlagern, bezogen auf die Bremsscheibe, axial verschiebbar an einem ortsfesten Bremsträger befestigt ist, wobei zumindest ein Gleitlager eine im Bremssattel (1) gehaltene Führungsbuchse (3) aufweist, die aus einer Lagerhülse (6), einem daran an einem Ende angeordneten Anschlagring sowie einer in der Lagerhülse (6) verschiebegesichert gehaltenen Gleitbuchse (10) besteht, in der ein mit dem Bremsträger verbundener Führungsholm (4) längs verschiebbar geführt ist, **dadurch gekennzeichnet, dass** der Anschlagring durch einen an der Außenseite des Bremssattels (1) anliegenden, an der Lagerhülse (6) radial nach außen gerichtet angeordneten, vorzugsweise angeformten Kragen (7) gebildet ist, der mindestens einen Vorsprung (8) aufweist, der in Korrespondenz mit dem Bremssattel (1) eine taschenförmiige Werkzeugaufnahme (9) bildet.

2. Scheibenbremse nach Anspruch 1, **dadurch gekennzeichnet, dass** die Lagerhülse (6) auf ihrer dem Kragen (7) abgewandten Seite ein eingeschnürtes Bündchen (12) aufweist, mit einem dazu umgestülpten, innenseitig verlaufenden Schenkel (11).

3. Scheibenbremse nach Anspruch 2, **dadurch gekennzeichnet, dass** an dem Bündchen (12) kraftschlüssig ein Balg (13) gehalten ist, der andererseits am Führungsholm (4) dicht anliegt.

4. Scheibenbremse nach einem der Ansprüche 2 oder 3, **dadurch gekennzeichnet, dass** das Bündchen (12) und/oder der Schenkel (11) eine Verschiebesicherung für die Gleitbuchse (10) bildet.

5. Scheibenbremse nach einem der vorhergehenden Ansprüche, **dadurch gekennzeichnet, dass** die Gleitbuchse (10) aus Metall oder Kunststoff, insbesondere einem Elastomer besteht.

6. Scheibenbremse nach einem der vorhergehenden Ansprüche, **dadurch gekennzeichnet, dass** die Lagerhülse (6) mindestens eine, nach innen gerichtete Sicke (15) aufweist.

7. Scheibenbremse nach Anspruch 6, **dadurch gekennzeichnet, dass** die Sicke (15) zwischen der Gleitbuchse (10) und einem kragenseitig in die Lagerhülse (6) eingepressten Kappe (14) angeordnet ist.

8. Scheibenbremse nach einem der Ansprüche 2 bis 7, **dadurch gekennzeichnet, dass** das Bündchen (12) an seiner Stirnseite mit mindestens einer Delle (16) versehen ist.

9. Scheibenbremse nach einem der vorhergehenden Ansprüche, **dadurch gekennzeichnet, dass** die Gleitbuchse (10) auf ihrer dem Führungsholm (4) zugewandten Innenseite mit mindestens einer Fettnut (17) oder mit Fettnäpfchen (18) versehen ist.

10. Scheibenbremse nach einem der vorhergehenden Ansprüche, **dadurch gekennzeichnet, dass** die Gleitbuchse (10) aus einem vorzugsweise umfänglich offenen, federnden Zahnring mit durch mäanderförmige Verformungen gebildeten Zähnen besteht.

## Claims

1. A disc brake for a commercial vehicle having a brake calliper (1), which encompasses a brake disc and is fixed to a stationary brake carrier such that it is able to slide axially in relation to the brake disc by two fixing elements in the form of slide bearings, at least one slide bearing having a guide bush (3), which is held in the brake calliper and consists of a bearing bush (6), a stop ring arranged at one end of the bearing bush (6) and a sliding bush (10), which is secured in the bearing bush (6) such that it is unable to slide and in which a guide arbour (4) connected to the brake carrier is guided such that it can be moved longitudinally, **characterised in that** the stop ring is formed by a collar (7), which is arranged on, preferably moulded onto, the bearing bush (6) oriented radially outwards and abutting the exterior of the brake calliper (1) and has at least one projection (8), which in conjunction with the brake calliper (1) forms a pocket-shaped tool receiver (9).

2. A disc brake according to claim 1, **characterised in that** the bearing bush (6) has at the end opposite the collar (7) a constricted cuff (12) having a folded-over leg (11) running along the inside.

3. A disc brake according to claim 2, **characterised in that** held against the cuff (12) in a force fit is a bellows (13), which abuts tightly against the guide arbour (4) on the other side.

4. A disc brake according to any of claims 2 or 3, **characterised in that** the cuff (12) and/or the leg (11) form a slide guard for the sliding bush (10).

5. A disc brake according to any of the preceding claims, **characterised in that** the sliding bush (10) is made of metal or plastic, in particular an elastomer.

6. A disc brake according to any of the preceding claims, **characterised in that** the bearing bush (6) has at least one inwardly directed recess (15).

7. A disc brake according to claim 6, **characterised in that** the recess (15) is arranged between the sliding bush (10) and a cap (14), which is pressed into the bearing bush (6) on the collar side.

8. A disc brake according to any of claims 2 to 7, **characterised in that** the cuff (12) is provided with at least one indentation (16) on its end face.

9. A disc brake according to any of the preceding claims, **characterised in that** the sliding bush (10) is provided with at least one grease channel (17) or with grease notches (18) on its interior face facing the guide arbour (4).

10. A disc brake according to any of the preceding claims, **characterised in that** the sliding bush (10) consists of a preferably circumferentially open, elastic toothed ring having teeth formed by meander-shaped formed sections.

## Revendications

1. Frein à disque pour un véhicule utilitaire, comprenant un étrier (1) de frein, qui chevauche un disque de frein et qui est fixé à un support de frein, fixe en position, de manière à coulisser axialement, rapporté au disque de frein, par deux éléments de fixation sous la forme de paliers lisses, dans lequel au moins un palier lisse a un manchon (3) de guidage, qui est maintenu dans l'étrier (1) de frein et qui est constitué d'un coussinet (6), d'un anneau de butée monté à une extrémité, ainsi que d'un manchon (10) lisse maintenu, sans possibilité de se déplacer, dans le coussinet (6), manchon (10) dans lequel est guidé, avec possibilité de se déplacer longitudinalement, un longeron (4) de guidage relié au support de frein, **caractérisé en ce que** l'anneau de butée est formé par un collet (7) s'appliquant au côté extérieur de l'étrier (1) de frein, monté en étant dirigé radialement vers l'extérieur sur le coussinet (6), de préférence en en venant de matière et ayant au moins une saillie (8), qui, en correspondance avec l'étrier (1) de frein, forme un logement (9) d'outil en forme de poche.

2. Frein à disque suivant la revendication 1, **caractérisé en ce que** le coussinet (6) a, du côté loin du collet (7), une collerette (12) rétreinte, ayant une branche (11) s'étendant du côté intérieur, qui en est relevée.

3. Frein à disque suivant la revendication 2, **caractérisé en ce que**, sur la collerette (12), est retenue à coopération de force un soufflet (13), qui s'applique d'autre part avec étanchéité au longeron (4) de guidage.

4. Frein à disque suivant l'une des revendications 2 ou 3, **caractérisé en ce que** la collerette (12) et/ou la branche (11) forme une sécurité au déplacement pour le manchon (10) lisse.

5. Frein à disque suivant l'une des revendications précédentes, **caractérisé en ce que** le manchon (10) lisse est en métal ou en matière plastique, notamment en un élastomère.

6. Frein à disque suivant l'une des revendications précédentes, **caractérisé en ce que** le coussinet (6) a au moins une nervure (5) dirigée vers l'intérieur.

7. Frein à disque suivant la revendication 6, **caractérisé en ce que** la nervure (15) est disposée entre le manchon (10) lisse et une coiffe (14), enfoncée dans le coussinet (6) du côté du collet.

8. Frein à disque suivant l'une des revendications 2 à 7, **caractérisé en ce que** la collerette (12) est pourvue, sur son côté frontal, d'au moins un bossage (16).

9. Frein à disque suivant l'une des revendications précédentes, **caractérisé en ce que** le manchon (10) lisse est pourvu, sur sa face intérieure tournée vers le longeron (4) de guidage, d'au moins une rainure (17) de graissage ou d'une écuelle (18) de graissage.

10. Frein à disque suivant l'une des revendications précédentes, **caractérisé en ce que** le manchon (110) lisse est constitué d'un anneau denté élastique, de préférence ouvert sur le pourtour et ayant des dents formées par des déformations sinueuses.
